# FASCICULE DE BREVET EUROPEEN

(11) **EP 3 148 663 B1**
(45) Date de publication et mention de la délivrance du brevet: **11.07.2018**
(21) Numéro de dépôt: 15732792.5
(22) Date de dépôt: 22.05.2015
(51) Int. Cl.: B01D 15/24, G01N 30/80, G01N 30/82, G01N 35/10

(54) **PROCEDE DE COLLECTE DE FRACTIONS DANS DES RECEPTACLES DE CHROMOGRAPHIE ET DISPOSITIF ASSOCIE**
VERFAHREN ZUM SAMMELN VON FRAKTIONEN IN CHROMATOGRAPHIEGEFÄSSEN UND ZUGEHÖRIGE VORRICHTUNG
METHOD FOR COLLECTING FRACTIONS IN CHROMATOGRAPHY VESSELS AND ASSOCIATED DEVICE

(30) Priorité: 26.05.2014 FR 1454739
(43) Date de publication de la demande: 05.04.2017
(73) Titulaire: Pic Solution SAS, 84911 AVIGNON Cedex 9 (FR)
(72) Inventeur: SHAIMI, Mohamed, F-84800 Isle Sur La Sorgue (FR)
(74) Mandataire: Novagraaf Technologies
(86) Numéro de dépôt international: PCT/FR2015/051369
(87) Numéro de publication internationale: WO 2015/181481

(56) Documents cités:
- EP-B1- 1 955 059
- WO-A1-2013/045554
- US-A- 3 168 124
- US-A- 3 209 795
- US-A1- 2008 190 829

## Description

L'invention concerne un procédé de collecte de fractions dans une série de réceptacles issus d'une chromatographie, en particulier d'une chromatographie liquide (HPLC), ou gazeuse, ou avec éluent supercritique (SFC). L'invention concerne aussi un dispositif de collecte associé à ce procédé.
Actuellement, les dispositifs de collecte de fractions dans une série de réceptacles issus de chromatographie comprennent un portique pouvant se déplacer le long d'un axe X horizontal et perpendiculaire à un axe longitudinal Y, lui aussi horizontal, du portique. Un bras est monté mobile à translation sur ce portique. Ce bras peut se déplacer parallèlement à l'axe longitudinal Y, d'une part, et, d'autre part, selon un axe vertical Z. Les trois axes X, Y, Z formant un repère orthonormé. Une tête de prélèvement est située à une extrémité libre du bras. Ainsi, le dispositif peut déplacer la tête de collecte d'un réceptacle à un autre de la série de réceptacles afin de collecter une fraction du contenu de ces réceptacles de manière successive. Un tel dispositif est par exemple décrit dans le document US 2008/0190829 A1.

On connaît également du document US 3,209,795 un dispositif de collecte de fractions comprenant deux têtes de collecte.

Un inconvénient d'un tel dispositif est que, lors d'un changement de position de la tête de collecte passant d'un réceptacle dans lequel une fraction a été collectée à un autre réceptacle dans lequel une fraction doit être prélevée (doit être collectée de nouveau), il y a des pertes de produit qui surviennent affectant donc au rendement de collecte. Ces pertes sont nuisibles car il y a risque de contaminations du contenu de réceptacles dont une fraction n'a pas encore été prélevée, d'une part, et, d'autre part, d'échappement dans l'atmosphère de produits chimiques non contenu. Un moyen d'éviter cela est d'introduire une voie de collecte fixe d'évacuation (appelée "waste" en terminologie anglo-saxonne) qui est sélectionnée lors du passage d'un réceptacle vers un autre. Cette opération permet de contenir le produit et d'éviter son émission à l'atmosphère, mais résulte désavantageusement dans la perte de produit à collecter entrainant une diminution de rendement de collecte.
Un but de l'invention est de fournir un procédé de collecte de fractions dans une série de réceptacles qui permettent d'éviter les pertes de produit.

A cette fin, il est prévu, selon l'invention, un procédé de collecte de fractions dans une série de réceptacles issus d'une chromatographie liquide, gazeuse ou avec éluent supercritique, destiné à être mis en oeuvre par un dispositif de collecte comportant deux têtes de collecte, le procédé comportant des étapes de :
a. positionnement d'une première tête de collecte sur un réceptacle N de la série de réceptacles ;
b. collecte d'une fraction dans le réceptacle N avec la première tête de collecte ;
c. positionnement d'une deuxième tête de collecte sur un réceptacle N+1 de la série de réceptacles, adjacent au réceptacle N ;
d. collecte d'une fraction dans le réceptacle N+1 avec la deuxième tête de collecte ;
e. positionnement de la première tête de collecte sur le réceptacle N+2 de la série de réceptacles, adjacent au réceptacle N+1 ;
f. répétition des étapes b à e sur l'ensemble des réceptacles de la série de réceptacles.

Avantageusement, mais facultativement, le procédé selon l'invention présente au moins l'une des caractéristiques techniques suivantes :
- l'étape c est réalisée juste après l'étape a ;
- les étapes b et c, d'une part, et les étapes d et e, d'autre part, sont réalisées de manière simultanée ;
- le procédé comporte une étape d'initialisation de positionnement des têtes de collecte sur des moyens d'évacuation d'un contenu de tête de collecte (101,102), l'étape a étant ensuite effectué avec N=1 ;
- l'étape de collecte b et/ou l'étape de collecte d est suivie d'une étape de nettoyage de la tête de collecte utilisée ;
- l'étape de nettoyage s'effectue par injection d'un volume prédéterminé de solvant frais ;
- l'étape de nettoyage est réalisée à l'aide d'une pompe-seringue (140) ;
- l'étape de nettoyage est précédé d'une étape de positionnement de la tête de collecte considérée sur les moyens d'évacuation d'un contenu de tête de collecte ; et
- l'étape de nettoyage comporte une sous étape d'injection d'un gaz dans la tête de collecte considérée pour évacuer un volume mort et/ou sécher la tête de collecte considérée.

Il est aussi prévu, selon l'invention, un dispositif de collecte de fractions dans une série de réceptacles issus d'une chromatographie liquide, gazeuse ou avec éluent supercritique, caractérisé en ce qu'il comporte deux têtes de collecte ainsi que des moyens de mise en oeuvre d'un procédé présentant au moins l'une des caractéristiques précédentes.

Avantageusement, mais facultativement, le dispositif selon l'invention comporte au moins l'une des caractéristiques techniques suivantes :
- le dispositif comporte un premier portique portant la première tête et un deuxième portique portant la deuxième tête, les deux portiques s'étendant en regard l'un de l'autre ;
- chaque portique comprend un bras monté mobile à translation dans un plan vertical, la tête de collecte associée étant monté sur une extrémité libre du bras, le bras s'étendant en saillie du portique en direction de l'autre portique ;
- le dispositif comporte un premier dispositif automatisé comprenant le premier portique et un deuxième dispositif automatisé comprenant le deuxième portique ;
- les premier et deuxième dispositifs automatisés sont des robots de type XYZ positionnés l'un en face de l'autre ; et,
- le dispositif comporte deux vannes de collecte (141,142), l'une des vannes de collecte étant reliée fluidiquement sur une voie à la première tête de collecte, l'autre des vannes de collecte étant reliée fluidiquement sur une voie à la deuxième tête de collecte, les deux vannes de collecte étant reliées fluidiquement sur une autre voie aux moyens d'évacuation d'un contenu de tête de collecte.

D'autres caractéristiques et avantage de l'invention apparaitront lors de la description ci-après d'un mode de réalisation de l'invention. Aux dessins annexés :
a. La figure 1 est une vue schématique de dessus d'un mode de réalisation d'un dispositif de collecte selon l'invention ;
b. Les figures 2 à 5 sont des vues schématiques des changements de positions suivant un procédé selon l'invention mis en oeuvre par le dispositif de la figure 1 ; et
c. Les figures 6 à 8 sont des vues schématiques d'un circuit de fluide du dispositif de la figure 1.

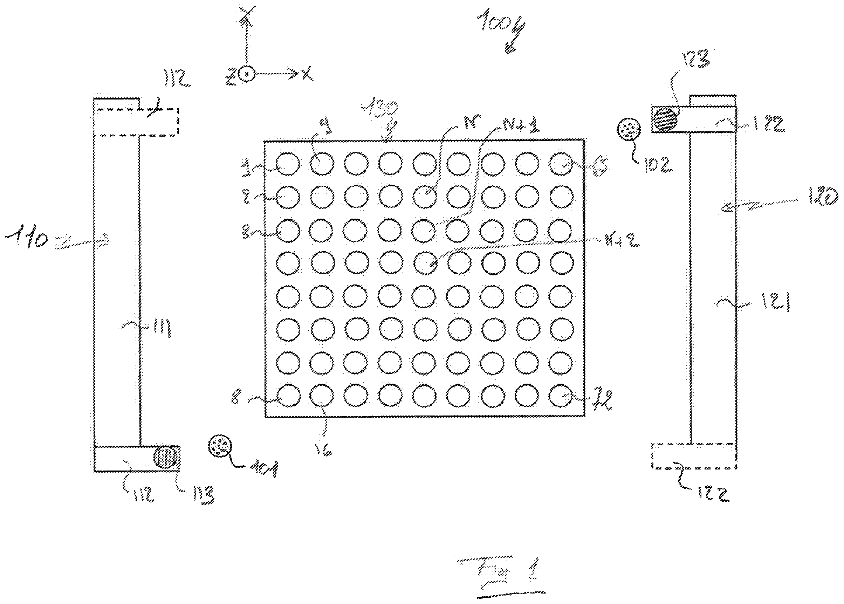

En référence à la figure 1, nous allons décrire un dispositif de collecte 100 selon l'invention. Le dispositif de collecte 100 selon l'invention comporte un premier dispositif automatisé 110 comprenant un premier portique 111 dont un axe longitudinal est parallèle à un axe Y d'un repère orthonormé (X,Y,Z). Le premier portique 111 est mobile à translation parallèlement à un axe X du repère orthonormé (X,Y,Z). De plus, le premier portique 111 comporte, monté mobile à translation, un bras 112. Le bras 112 s'étend en saillie depuis le portique 111 dans une direction perpendiculaire à l'axe longitudinal du premier portique 111. Dans le cas ici illustré, cette direction perpendiculaire est parallèle à l'axe X du repère orthonormé (X,Y,Z). Le bras 112 est mobile à translation parallèlement à l'axe longitudinal du portique 111 (donc parallèlement à l'axe Y), d'une part, et, d'autre part, selon un axe vertical parallèle à l'axe Z du repère orthonormé (X,Y,Z). Au niveau d'une extrémité libre, le bras 112 comporte une première tête de collecte 113.

Le dispositif de collecte 100 selon l'invention comporte un deuxième dispositif automatisé 120 comprenant un deuxième portique 121 similaire au premier portique 111. Le deuxième portique 121 présente un axe longitudinal parallèle à l'axe Y du repère orthonormé (X,Y,Z). Le deuxième portique 121 est mobile à translation parallèlement à l'axe X du repère orthonormé (X,Y,Z). De plus, le deuxième portique 121 comporte, monté mobile à translation, un bras 122. Le bras 122 s'étend en saillie depuis le portique 121 dans une direction perpendiculaire à l'axe longitudinal du deuxième portique 121. Dans le cas ici illustré, cette direction perpendiculaire est parallèle à l'axe X du repère orthonormé (X,Y,Z). Le bras 122 est mobile à translation parallèlement à l'axe longitudinal du portique 121 (donc parallèlement à l'axe Y), d'une part, et, d'autre part, selon un axe vertical parallèle à l'axe Z du repère orthonormé (X,Y,Z). Au niveau d'une extrémité libre, le bras 122 comporte une deuxième tête de collecte 123.

Le dispositif de collecte 100 selon l'invention comporte en outre un plateau 130. Le plateau 130 est agencé de sorte à pouvoir recevoir une série de réceptacles, ici illustré, au nombre de 72 référencés 1 à 72. La série de réceptacles 1-72 est disposée de manière régulière en colonne (ici au nombre de 9) et en ligne (ici au nombre de 8). En pratique, les réceptacles 1-72 se présentent sous la forme de tubes à essais dont le diamètre détermine le nombre de colonnes et de lignes de l'agencement de la série de réceptacles sur le plateau 130. Au final, un intervalle entre deux colonnes successives est constant sur l'ensemble du plateau 130. De même, un intervalle entre deux lignes successives est constant sur l'ensemble du plateau. Les tubes à essais peuvent être remplacés par des bouteilles, par exemple. Le nombre de réceptacles par ligne et par colonne peut varier de 1 à l'infini en théorie et en fonction des besoins. Le nombre de plateau contenant les réceptacles peut aussi varier en fonction des besoins. Il est à noter que dans le cas de bouteilles, il n'y a pas besoin de plateau, les bouteilles pouvant être disposés sur un simple plan prévu dans le dispositif.

Le plateau 130 est positionné entre les premier 110 et deuxième 120 dispositifs automatisés. Les premier 110 et deuxième 120 dispositifs automatisés sont positionnés l'un en regard de l'autre de sorte que les premier 111 et deuxième 121 portiques soient parallèles l'une par rapport à l'autre. Dans une position de repos du dispositif de collecte 100 selon l'invention, le bras 112 est positionné en « bas » du premier portique 111, en se référant à la figure 1, alors que le bras 122 est positionné en « haut » du deuxième portique 121. Une position maximale du bras 112 ou 122 le long de son portique 111 ou 121 associé est représentée par des traits en pointillé.

Il est à noter que, bien qu'un seul plateau 130 soit représenté, le dispositif de collecte 100 selon l'invention peut comprendre plusieurs plateaux 130, en particulier deux, voire trois. Dans ce cas, les plateaux 130 sont positionnés adjacents deux à deux, alignés l'un après l'autre parallèlement à l'axe X du repère orthonormé (X,Y,Z) entre les deux dispositifs automatisés 110 et 120.

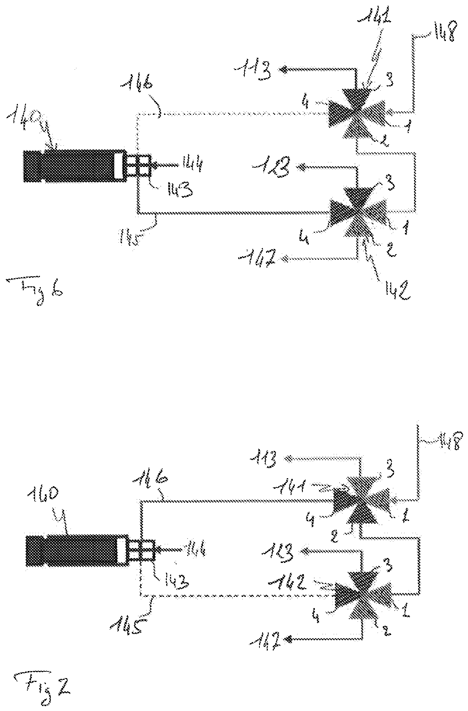

D'autre part, le dispositif de collecte 100 selon l'invention comporte des moyens d'évacuation 101,102 d'un contenu de tête de collecte, ici au nombre de deux, situés à proximité des têtes de collecte 113 et 123 lorsque le dispositif de collecte 100 selon l'invention est en position de repos comme illustré à la figure 1. En variante de réalisation, dans cette position de repos, la première tête de collecte 113 est positionnée sur des premiers moyens d'évacuation 101 et la deuxième tête de collecte 123 est positionnée sur des deuxième moyens d'évacuation 102. Ces moyens d'évacuation 101, 102 sont en connexion fluidique avec un bac de vidange (non représenté, mais référencé 147 sur les figures 6 à 8) pour le stockage et l'évacuation des produits ainsi récupérés. Cela permet de réaliser le nettoyage des têtes de collecte lors d'un passage d'un produit à collecter à un autre. Les moyens d'évacuation 101, 102 sont ici un dispositif d'évacuation comportant une ouverture de réception de la tête de collecte. En variante de réalisation, les moyens d'évacuations sont des réceptacles en forme de gouttière qui s'étendent le long d'au moins un des côtés du plateau 130 soit selon l'axe X, soit selon l'axe Y, soit selon les deux axes X et Y. Dans une autre variante de réalisation, les moyens d'évacuations comportent un réceptacle fixe servant lors du nettoyage des têtes de collecte. Dans d'autres variantes, les moyens d'évacuations sont un réceptacle fixe pouvant être un cylindre disposé aux extrémités des axes X=0 et Y=0, ou un réceptacle de type caniveau le long de l'axe X de manière à réduire les trajets de la tête de collecte lors de l'étape de nettoyage : ainsi, il est possible de nettoyer avec l'éluent, de type CO2/solvant et/ou solvant seul, l'intérieur de la tête de collecte, et aussi il est possible de nettoyer l'extérieur de la tête de collecte en remplissant le réceptacle fixe. Pour cela, les moyens d'évacuation comprennent une vanne se trouvant en dessous du réceptacle fixe afin de pouvoir tremper l'extérieur de la tête dans le solvant avant vidange du réceptacle fixe. Cette opération de nettoyage peut être répétée autant de fois que souhaité.

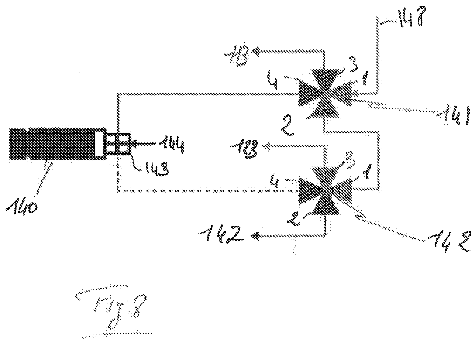

En référence maintenant aux figures 6 à 8, le dispositif de collecte 100 selon l'invention comporte un circuit fluidique. Ce circuit fluidique comporte une première vanne 141 comprenant quatre voies (1, 2, 3, 4) et pouvant prendre deux positions :
d. Une première position où les voies 1 et 2, d'une part, et les voies 3 et 4, d'autre part, sont en communication fluidique (cf. figures 6 et 8) ; et,
e. Une deuxième position où les voies 1 et 3, d'une part, et les voies 2 et 4, d'autre part, sont en communication fluidique (cf. figure 7).

Le circuit fluidique comporte une deuxième vanne 142 comprenant quatre voies (1, 2, 3, 4) et pouvant prendre deux positions :
f. Une première position où les voies 1 et 2, d'une part, et les voies 3 et 4, d'autre part, sont en communication fluidique (cf. figures 6 et 7) ; et,
g. Une deuxième position où les voies 1 et 3, d'une part, et les voies 2 et 4, d'autre part, sont en communication fluidique (cf. figure 8).

De plus, le circuit fluidique comporte des moyens formant pompe 140. Ici, les moyens formant pompe comprennent une pompe-seringue 140 (qui peut être une pompe à piston ou tout autre moyen agencé de sorte à pouvoir délivrer un fluide) et une vanne 143 comportant quatre voies et trois positions. Une première voie est connectée fluidiquement à la chambre à volume variable de la pompe-seringue 140. Une deuxième voie est connectée fluidiquement à un réservoir 144 contenant un produit de nettoyage, de préférence un solvant frais identique à un solvant ayant servi à effectuer la chromatographie ayant fourni la série de réceptacles 1-72 du plateau 130 à collecter. Une troisième voie est fluidiquement connectée 145 à la voie 4 de la deuxième vanne 142. La quatrième voie est connectée fluidiquement 146 à la voie 4 de la première vanne 141. Les trois positions permettent de connecter fluidiquement :
h. Les première et deuxième voies pour effectuer un remplissage de la chambre à volume variable de la pompe seringue 140 et produit de nettoyage ;
i. Les deuxième et troisième voies pour envoyer, vers la deuxième vanne 142, du produit de nettoyage ; et,
j. Les deuxième et quatrième voies pour envoyer, vers la première vanne 141, du produit de nettoyage.

La voie 3 de la première vanne 141 et connectée fluidiquement à la première tête de collecte 113. La voie 3 de la deuxième vanne 142 est fluidiquement connectée à la deuxième tête de collecte 123.

La voie 1 de la première vanne 141 est connectée fluidiquement à une canalisation de collecte 148. La canalisation de collecte 148 permet de collecter les fractions des différents réceptacles de la série de réceptacles du plateau 130 à travers les têtes de collecte 113 et 123, pour ensuite les analyser à l'aide de moyens d'analyse adaptés et connus en soi de la personne de l'art, comme par exemple un séparateur permettant de séparer les différents produits de la fraction collectée. La voie 2 de la première vanne 141 est connectée fluidiquement à la voie 1 de la deuxième vanne 142. Enfin, la voie 2 de la deuxième vanne 142 est reliée de manière fluidique au bac de vidange 147.

Dans la position de repos du dispositif de collecte 100 selon l'invention, le circuit fluidique est dans une configuration similaire à celle illustrée à la figure 6. Les première 141 et deuxième 142 vannes sont dans leur première position respective : la voie 1 connectée fluidiquement à la voie 2 et la voie 3 connectée fluidiquement à la voie 4. Dans cette configuration, il est alors possible de nettoyer les deux têtes de collecte 113 et 123 à l'aide de la pompe-seringue 140, la canalisation de collecte 148 étant en liaison fluidique avec le bac de vidange 147 à travers les deux vannes 141 et 142.

Dans une première configuration de collecte, illustrée à la figure 7, la première vanne 141 est dans sa deuxième position où les voies 1 et 3 sont en communication fluidique ainsi que les voies 2 et 4. La deuxième vanne 142 est dans sa première position. Ainsi, la canalisation de collecte est mise en relation fluidique avec la première tête de collecte 113 permettant alors la collecte d'une fraction d'un réceptacle 1-72 du plateau 130 sur lequel est positionnée la première tête de collecte 113. D'autre part, un nettoyage de la deuxième tête de collecte 123 est réalisé via les voies 3 et 4 de la deuxième vanne 142 ainsi qu'un nettoyage de la partie du circuit fluidique formée de la canalisation entre la voie 2 de la première vanne 141 et la voie 1 de la deuxième vanne 142, et ce à l'aide de la pompe-seringue 140.

Dans une deuxième configuration de collecte, illustrée à la figure 8, la première vanne 141 est dans sa première position (la voie 1 connectée fluidiquement à la voie 2 et la voie 3 connectée fluidiquement à la voie 4) et la deuxième vanne 142 est dans sa deuxième position (les voies 1 et 3 sont en communication fluidique ainsi que les voies 2 et 4). Ainsi, la canalisation de collecte 148 est en liaison fluidique avec la deuxième tête de collecte 123, via les deux vannes 141 et 142, permettant alors la collecte d'une fraction d'un réceptacle 1-72 du plateau 130 sur lequel est positionnée la deuxième tête de collecte 123. D'autre part, un nettoyage de la première tête de collecte 113 est réalisé via les voies 4 et 3 de la première vanne 141, à l'aide de la pompe-seringue 140.

Nous allons maintenant décrire plus en détail un procédé de collecte de fractions dans la série de réceptacles 1-72 issus d'une chromatographie selon l'invention. Ce procédé est mis en oeuvre dans et par le dispositif de collecte 100 selon l'invention qui vient d'être décrit précédemment.

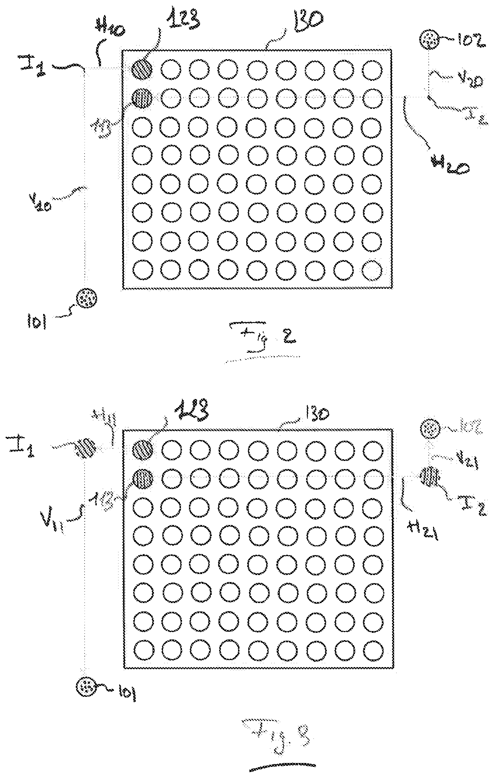

Dans une étape d'initialisation, le procédé de collecte selon l'invention fait passer le dispositif de collecte 100 selon l'invention de sa position de repos, où les têtes de collecte 113 et 123 sont positionnées sur les moyens d'évacuation d'un contenu 101 et 102 respectivement, à une première position de fonctionnement d'une collecte illustrée par exemple à la figure 2. Pour cela, le procédé de collecte selon l'invention commande au premier dispositif automatisé 110 de soulever selon l'axe Z la première tête de collecte 113 pour que cette dernière s'éloigne des moyens d'évacuation 101 où elle était positionnée, puis de la déplacer en translation selon une direction V10 parallèle à l'axe Y vers une position intermédiaire I1, puis de la déplacer en translation selon une direction H10 parallèle à l'axe X jusqu'à être à l'aplomb du réceptacle N=1 du plateau 130. Enfin, le procédé de collecte selon l'invention commande au premier dispositif automatisé 110 d'abaisser selon l'axe Z la première tête de collecte 113 pour positionner cette dernière sur le réceptacle N=1 du plateau 130. Dès lors, le procédé de collecte selon l'invention procède à une collecte d'une fraction de produit contenu dans le réceptacle N=1, en pilotant les vannes 141 et 142 du circuit fluidique du dispositif de collecte 100 selon l'invention. Ensuite, une étape de nettoyage de la première tête de collecte 113 est réalisé par le procédé de collecte selon l'invention. Pour cela, le procédé de collecte selon l'invention commande le premier dispositif automatisé 110 pour qu'il fasse faire à la première tête de collecte 113 le chemin inverse : soulèvement de la tête de collecte 113 du réceptacle N=1, mouvement de translation H11 jusqu'au point I1 puis mouvement de translation V11 jusqu'à l'aplomb des moyens d'évacuation 101 puis abaissement de la tête de collecte 113 pour positionnement de cette dernière sur les moyens d'évacuation 101 (voir la figure 3). Enfin, une commande est envoyée à la pompe-seringue 140 et à la vanne 143 pour effectuer le nettoyage de la tête de collecte 113.

Pendant l'étape de collecte et de nettoyage éventuelle de la première tête de collecte 113 (ou encore après l'étape de nettoyage de la première tête de collecte 113), le procédé de collecte selon l'invention commande, de manière similaire, au deuxième dispositif automatisé 120 de soulever selon l'axe Z la deuxième tête de collecte 123 pour que cette dernière s'éloigne des moyens d'évacuation 102 où elle était positionnée, puis de la déplacer en translation selon une direction V20 parallèle à l'axe Y vers une position intermédiaire I2, puis de la déplacer en translation selon une direction H20 parallèle à l'axe X jusqu'à être à l'aplomb du réceptacle N=2 du plateau 130. Enfin, le procédé de collecte selon l'invention commande au deuxième dispositif automatisé 120 d'abaisser selon l'axe Z la deuxième tête de collecte 123 pour positionner cette dernière sur le réceptacle N=2 du plateau 130. Dès lors, le procédé de collecte selon l'invention procède à une collecte d'une fraction de produit contenu dans le réceptacle N=2, en pilotant les vannes 141 et 142 du circuit fluidique du dispositif de collecte 100 selon l'invention. Ensuite, une étape de nettoyage de la deuxième tête de collecte 123 est réalisé par le procédé de collecte selon l'invention. Pour cela, le procédé de collecte selon l'invention commande le deuxième dispositif automatisé 120 pour qu'il fasse faire à la deuxième tête de collecte 123 le chemin inverse : soulèvement de la tête de collecte 123 du réceptacle N=2, mouvement de translation H21 jusqu'au point I2 puis mouvement de translation V21 jusqu'à l'aplomb des moyens d'évacuation 102 puis abaissement de la tête de collecte 123 pour positionnement de cette dernière sur les moyens d'évacuation 102 (voir la figure 3). Enfin, une commande est envoyée à la pompe-seringue 140 et à la vanne 143 pour effectuer le nettoyage de la tête de collecte 123.

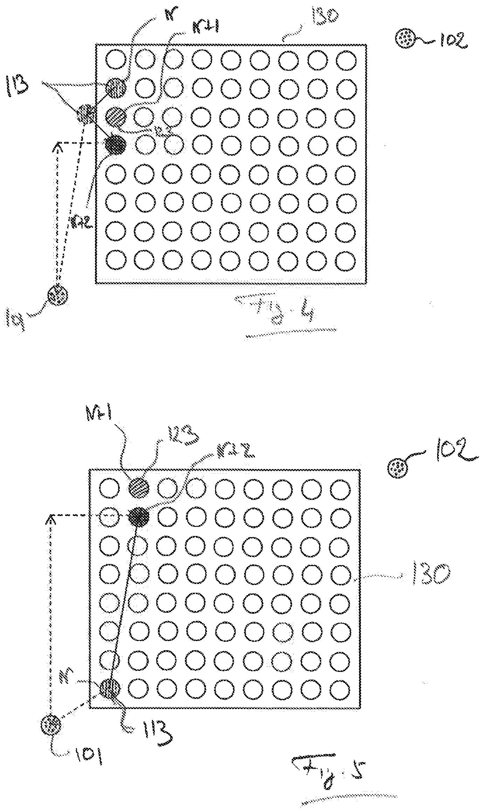

Pendant l'étape de collecte et de nettoyage éventuelle de la deuxième tête de collecte 123, le procédé de collecte selon l'invention déplace la première tête de collecte 113 vers le réceptacle suivant N=3 du plateau 130. Le procédé de collecte selon l'invention boucle alors jusqu'à ce que le dernier réceptacle présent sur la plateau 130 soit collecté. La boucle est illustrée aux figures 4 et 5.

La première tête de collecte 113 est positionnée sur le réceptacle N du plateau 130. Pendant qu'une collecte d'une fraction du produit contenu dans le réceptacle N est réalisée, le procédé de collecte selon l'invention positionne la deuxième tête de collecte 123 sur le réceptacle N+1 du plateau 130 depuis le réceptacle N-1 de manière similaire à ce qui va être maintenant décrit en relation avec la première tête de collecte 113, *mutatis mutandis.*

Pendant qu'une collecte d'une fraction du produit contenu dans le réceptacle N+1 est réalisée via la deuxième tête de collecte 123, le procédé de collecte selon l'invention soulève selon l'axe Z la première tête de collecte 113 du réceptacle N, puis fait effectuer un mouvement de translation selon l'axe Y en faisant passer la première tête de collecte 113 au dessus de la deuxième tête de collecte 123 positionnée sur le réceptacle N+1 jusqu'à ce que la première tête de collecte 113 soit à l'aplomb du réceptacle N+2, puis abaisse selon l'axe Z la première tête de collecte 113 pour la positionnée sur le réceptacle N+2 en attente de collecte. En variante, il est possible de passer, pour la tête de collecte 113, du réceptacle N au réceptacle N+2 en soulevant la tête de collecte selon l'axe Z, puis en la faisant translater vers l'arrière suivant l'axe X, puis translater suivant l'axe Y, puis translater vers l'avant suivant l'axe X, puis en la faisant descendre suivant l'axe Z sur le réceptacle N+2.

L'étape de collecte réalisée par l'une ou l'autre des têtes de collecte 113, 123 est éventuellement suivie d'une étape de nettoyage de la tête de collecte considérée. Cette étape de nettoyage peut nécessiter de déplacer préalablement la tête de collecte considérée vers les moyens d'évacuation 101, 102 associés à la tête de collecte considérée. Dans ce cas, le procédé de collecte selon l'invention déplace la tête de collecte 113, par exemple, selon un chemin illustré en pointillé sur les figures 4 et 5 entre le réceptacle N et le réceptacle N+2 :
k. Soulèvement de la première tête de collecte 113 du réceptacle N selon l'axe Z
l. Déplacement en translation vers les moyens d'évacuation 101, éventuellement selon un cheminement similaire à celui décrit et illustré à la figure 3
m. Abaissement selon l'axe Z et positionnement de la première tête de collecte 113 sur les moyens d'évacuation 101
n. Nettoyage de la première tête de collecte 113
o. Soulèvement de la première tête de collecte 113 des moyen d'évacuation 101 selon l'axe Z
p. Déplacement en translation vers le réceptacle N+2, éventuellement selon un cheminement similaire à celui décrit et illustré à la figure 2
q. Abaissement selon l'axe Z et positionnement de la première tête de collecte 113 sur le réceptacle N+2

Ensuite, le procédé de collecte selon l'invention effectue des étapes similaires pour déplacer la deuxième tête de collecte 123 du réceptacle N+1 vers le réceptacle N+3 alors que la première tête de collecte est positionnée sur le réceptacle N+2.

Le procédé de collecte selon l'invention continue ainsi de suite jusqu'à ce que le dernier réceptacle présent sur le plateau 130 soit collecté. Si un autre plateau 130 est présent, le procédé de collecte selon l'invention collecte la série de réceptacles présent sur cet autre plateau 130 de manière similaire à ce qui a été décrit précédemment.

Le fait d'utiliser deux vannes 141, 142 ainsi connectées fluidiquement à un bac de vidange 147 et à une canalisation de collecte 148 permet de réduire fortement les risque de contamination.

En variante de réalisation, il est possible de prévoir sur les canalisations reliant, d'une part, la vanne 141 à la première tête de collecte 113, et, d'autre part, la vanne 142 à la deuxième tête de collecte 123, une vanne trois voies permettant, lors de l'étape de nettoyage de l'une 113 ou 123 des têtes de collecte, d'injecter dans ladite canalisation reliant la tête de collecte 113 ou 123 considérée à sa vanne associée 141 ou 142 du gaz, comme de l'air, du CO2 ou de l'azote sec. Cela permet d'évacuer le volume mort d'éluent ou de solvant frais utilisé pour le nettoyage de ladite canalisation considérée. Cela permet aussi de réaliser un séchage de ladite canalisation.

Afin de mettre en oeuvre le procédé de collecte selon l'invention qui vient d'être décrit, le dispositif de collecte 100 selon l'invention comporte des moyens de mise en oeuvre à cette fin. Ces moyens de mise en oeuvre sont formés d'un automate de pilotage des deux dispositifs automatisés 110 et 120.

Les premier 110 et deuxième 120 dispositifs automatisés sont des robots de type XYZ positionnés l'un en face de l'autre.

Un tel automate de pilotage est connu en soi et comporte des moyens pour recevoir une programmation du procédé de collecte selon l'invention.

Bien entendu, il est possible d'apporter à l'invention de nombreuses modifications sans pour autant sortir du cadre de celle-ci.

Par exemple, dans l'étape de collecte, pour un éluent de type CO2/solvant, la séparation du CO2 rendu gazeux et du produit d'intérêt à collecter, seul ou dilué dans un solvant ayant servi à la composition de l'éluent, est effectué au-dessus du réceptacle à l'aide d'un séparateur gaz-liquide à haute efficacité.

## Revendications

1. Procédé de collecte de fractions dans une série de réceptacles (1,2,...,72) issus d'une chromatographie liquide, gazeuse ou avec éluent supercritique, destiné à être mis en oeuvre par un dispositif de collecte (100) comportant exactement deux têtes de collecte (113,123), le procédé comportant des étapes de :
a. positionnement d'une première tête de collecte sur un réceptacle N de la série de réceptacles ;
b. collecte d'une fraction dans le réceptacle N avec la première tête de collecte ;
c. positionnement d'une deuxième tête de collecte sur un réceptacle N+1 de la série de réceptacles, adjacent au réceptacle N ;
d. collecte d'une fraction dans le réceptacle N+1 avec la deuxième tête de collecte ;
e. positionnement de la première tête de collecte sur le réceptacle N+2 de la série de réceptacles, adjacent au réceptacle N+1 ;
f. répétition des étapes b à e sur l'ensemble des réceptacles de la série de réceptacles.

2. Procédé selon la revendication 1, **caractérisé en ce que**, l'étape c est réalisée juste après l'étape a.

3. Procédé selon la revendication 1 ou 2, **caractérisé en ce que** les étapes b et c, d'une part, et les étapes d et e, d'autre part, sont réalisées de manière simultanée.

4. Procédé selon l'une des revendications 1 à 3, **caractérisé en ce qu'**il comporte une étape d'initialisation de positionnement des têtes de collecte sur des moyens d'évacuation d'un contenu de tête de collecte (101,102), l'étape a étant ensuite effectuée avec N=1.

5. Procédé selon l'une des revendications 1 à 4, **caractérisé en ce que** l'étape de collecte b et/ou l'étape de collecte d est suivie d'une étape de nettoyage de la tête de collecte utilisée.

6. Procédé selon la revendication 5, **caractérisé en ce que** l'étape de nettoyage s'effectue par injection d'un volume prédéterminé de solvant frais.

7. Procédé selon la revendication 5 ou 6, **caractérisé en ce que** l'étape de nettoyage est réalisée à l'aide d'une pompe-seringue (140).

8. Procédé selon l'une des revendications 5 à 7, **caractérisé en ce que** l'étape de nettoyage est précédée d'une étape de positionnement de la tête de collecte considérée sur les moyens d'évacuation d'un contenu de tête de collecte.

9. Procédé selon l'une des revendications 5 à 8, **caractérisé en ce que** l'étape de nettoyage comporte une sous étape d'injection d'un gaz dans la tête de collecte considérée pour évacuer un volume mort et/ou sécher la tête de collecte considérée.

10. Dispositif de collecte (100) de fractions dans une série de réceptacles (1,2,...,72) issus d'une chromatographie liquide, gazeuse ou avec éluent supercritique, **caractérisé en ce qu'**il comporte exactement deux têtes de collecte (113,123) ainsi que des moyens de mise en oeuvre d'un procédé selon l'une des revendication 1 à 9, les moyens de mise en oeuvre étant formés d'un automate de pilotage.

11. Dispositif selon la revendication 10, **caractérisé en ce qu'**il comporte un premier portique (110) portant la première tête et un deuxième portique (120) portant la deuxième tête, les deux portiques s'étendant en regard l'un de l'autre.

12. Dispositif selon la revendication 10, **caractérisé en ce que** chaque portique comprend un bras (112,122) monté mobile à translation dans un plan vertical, la tête de collecte associée étant montée sur une extrémité libre du bras, le bras s'étendant en saillie du portique en direction de l'autre portique.

13. Dispositif selon la revendication 11 ou 12, **caractérisé en ce qu'**il comporte un premier dispositif automatisé comprenant le premier portique et un deuxième dispositif automatisé comprenant le deuxième portique.

14. Dispositif selon la revendication 13, **caractérisé en ce que** les premier et deuxième dispositifs automatisés sont des robots de type XYZ positionnés l'un en face de l'autre.

15. Dispositif selon l'une des revendications 10 à 14, **caractérisé en ce qu'**il comporte deux vannes de collecte (141,142), l'une des vannes de collecte étant reliée fluidiquement sur une voie à la première tête de collecte, l'autre des vannes de collecte étant reliée fluidiquement sur une voie à la deuxième tête de collecte, les deux vannes de collecte étant reliées fluidiquement sur une autre voie aux moyens d'évacuation d'un contenu de tête de collecte.

## Patentansprüche

1. Verfahren zum Sammeln von Fraktionen in einer Reihe von Behältnissen (1, 2, ..., 72), die aus einer Flüssig- oder Gaschromatographie oder aus einer Chromatographie mit einem superkritischen Eluenten stammen, dazu bestimmt, durch eine Sammelvorrichtung (100), umfassend genau zwei Sammelköpfe (113, 123), durchgeführt zu werden, wobei das Verfahren die folgenden Schritte umfasst:
a. Positionieren eines ersten Sammelkopfes auf ein Behältnis N der Reihe von Behältnissen;
b. Sammeln einer Fraktion in dem Behältnis N mit einem ersten Sammelkopf;
c. Positionieren eines zweiten Sammelkopfes auf ein dem Behältnis N benachbarten Behältnis N+1 der Reihe von Behältnissen;
d. Sammeln einer Fraktion in dem Behältnis N+1 mit einem zweiten Sammelkopf;
e. Positionieren des ersten Sammelkopfes auf das dem Behältnis N+1 benachbarten Behältnis N+2 der Reihe von Behältnissen;
f. Wiederholen der Schritte b bis e auf die Gesamtheit der Behältnisse der Reihe von Behältnissen.

2. Verfahren gemäß Anspruch 1, **dadurch gekennzeichnet, dass** der Schritt c direkt nach Schritt a durchgeführt wird.

3. Verfahren gemäß Anspruch 1 oder 2, **dadurch gekennzeichnet, dass** die Schritte b und c einerseits und die Schritte d und e andererseits auf eine gleichzeitige Weise durchgeführt werden.

4. Verfahren gemäß einem der Ansprüche 1 bis 3, **dadurch gekennzeichnet, dass** es einen Initialisierungsschritt des Positionierens der Sammelköpfe auf Evakuierungsmittel eines Inhalts des Sammelkopfes (101, 102) beinhaltet, wobei der Schritt a danach mit N=1 ausgeführt wird.

5. Verfahren gemäß einem der Ansprüche 1 bis 4, **dadurch gekennzeichnet, dass** der Sammelschritt b und/oder der Sammelschritt d von einem Reinigungsschritt des verwendeten Sammelkopfes gefolgt wird.

6. Verfahren gemäß Anspruch 5, **dadurch gekennzeichnet, dass** der Reinigungsschritt durch Injektion eines vorher festgelegten Volumens an frischem Lösemittel ausgeführt wird.

7. Verfahren gemäß Anspruch 5 oder 6, **dadurch gekennzeichnet, dass** der Reinigungsschritt mithilfe einer Spritzenpumpe (140) durchgeführt wird.

8. Verfahren gemäß einem der Ansprüche 5 bis 7, **dadurch gekennzeichnet, dass** dem Reinigungsschritt ein Schritt des Positionierens des in Betracht gezogenen Sammelkopfes auf die Evakuierungsmittel eines Inhalts des Sammelkopfes vorausgeht.

9. Verfahren gemäß einem der Ansprüche 5 bis 8, **dadurch gekennzeichnet, dass** der Reinigungsschritt einen Unterschritt des Injizierens eines Gases in den in Betracht gezogenen Sammelkopf beinhaltet, um ein Totvolumen zu evakuieren und/oder den in Betracht gezogenen Sammelkopf zu trocknen.

10. Sammelvorrichtung (100) von Fraktionen in einer Reihe von Behältnissen (1, 2, ..., 72), die aus einer Flüssig- oder Gaschromatographie oder aus Chromatographie mit einem superkritischen Eluenten stammen, **dadurch gekennzeichnet, dass** sie genau zwei Sammelköpfe (113, 123) beinhaltet sowie eine automatische Steuerung der zwei Sammelköpfe, angeordnet auf eine Weise, um das Verfahren gemäß einem der Ansprüche 1 bis 9 zu realisieren.

11. Vorrichtung gemäß Anspruch 10, **dadurch gekennzeichnet, dass** sie ein erstes Gestell (110) beinhaltet, das den ersten Kopf trägt, und ein zweites Gestell (120), das den zweiten Kopf trägt, wobei die zwei Gestelle sich nebeneinander erstrecken.

12. Vorrichtung gemäß Anspruch 10, **dadurch gekennzeichnet, dass** jedes Gestell einen in einer vertikalen Ebene translationsmobil montierten Arm (112, 122) umfasst, wobei der zugehörige Sammelkopf an einem freien Ende des Arms montiert ist, wobei der Arm sich von dem Gestell hervorstehend in Richtung des anderen Gestells erstreckt.

13. Vorrichtung gemäß Anspruch 11 oder 12, **dadurch gekennzeichnet, dass** sie eine erste automatisierte Vorrichtung, umfassend das erste Gestell, und eine zweite automatisierte Vorrichtung, umfassend das zweite Gestell, beinhaltet.

14. Vorrichtung gemäß Anspruch 13, **dadurch gekennzeichnet, dass** die erste und zweite automatisierte Vorrichtung einander gegenüberliegend positionierte Roboter der Art XYZ sind.

15. Vorrichtung gemäß einem der Ansprüche 10 bis 14, **dadurch gekennzeichnet, dass** sie zwei Sammelwannen (141, 142) beinhaltet, wobei eine der Sammelwannen fluid mit einer Schiene an dem ersten Sammelkopf verbunden ist, wobei die andere der Sammelwannen fluid mit einer Schiene an dem zweiten Sammelkopf verbunden ist, wobei die zwei Sammelwannen fluid auf einer anderen Schiene mit Evakuierungsmitteln eines Inhalts des Sammelkopfes verbunden sind.

## Claims

1. Method for collecting fractions from liquid, gas or supercritical fluid chromatography in a series of vessels (1, 2,..., 72), intended for being implemented by a collection device (100) comprising exactly two collection heads (113, 123), with the method comprising the steps of:
a. positioning a first collection head on a vessel N of the series of vessels;
b. collecting a fraction in the vessel N with the first collection head;
c. positioning a second collection head on a vessel N+1 of the series of vessels, adjacent to the vessel N;
d. collecting a fraction in the vessel N+1 with the second collection head;
e. positioning the first collection head on the vessel N+2 of the series of vessels, adjacent to the vessel N+1;
f. repeating steps b to e on all the vessels of the series of vessels.

2. Method according to claim 1, **characterised in that**, the step c is carried out immediately after the step a.

3. Method according to claim 1 or 2, **characterised in that** the steps b and c, on the one hand, and the steps d and e, on the other hand, are carried out simultaneously.

4. Method according to one of claims 1 to 3, **characterised in that** it comprises a step of initialising the positioning of the collection heads on means for evacuating a content from the collection head (101, 102), the step a then being carried out with N=1.

5. Method according to one of claims 1 to 4, **characterised in that** the step of collecting b and/or the step of collecting d is followed by a step of cleaning of the used collection head.

6. Method according to claim 5, **characterised in that** the step of cleaning is carried out by injecting a predetermined volume of fresh solvent.

7. Method according to claim 5 or 6, **characterised in that** the step of cleaning is carried out using a syringe pump (140).

8. Method according to one of claims 5 to 7, **characterised in that** the step of cleaning is preceded by a step of positioning the collection head considered on the means for evacuating a content from the collection head.

9. Method according to one of claims 5 to 8, **characterised in that** the step of cleaning comprises a substep of injecting a gas into the collection head considered in order to evacuate a dead volume and/or dry the collection head considered.

10. Method for collecting (100) fractions from liquid, gas or supercritical fluid chromatography in a series of vessels (1, 2,..., 72), **characterised in that** it comprises exactly two collection heads (113,123) as well as means for implementing a method according to one of claims 1 to 9, with the means for implementing formed from a control automation device.

11. Device according to claim 10, **characterised in that** it comprises a first gate (110) carrying the first head and a second gate (120) carrying the second head, with the two gates extending facing one another.

12. Device according to claim 10, **characterised in that** each gate comprises an arm (112, 122) movably mounted in translation in a vertical plane, with the associated collection head mounted on a free end of the arm, with the arm extending protruding from the gate in the direction of the other gate.

13. Device according to claim 11 or 12, **characterised in that** it comprises a first automated device comprising the first gate and a second automated device comprising the second gate.

14. Device according to claim 13, **characterised in that** the first and second automated devices are robots of the XYZ type positioned facing one another.

15. Device according to one of claims 10 to 14, **characterised in that** it comprises two collection valves (141, 142), with one of the collection valves being fluidically connected on a channel to the first collection head, with the other of the collection valves being fluidically connected on a channel to the second collection head, with the two collection valves being fluidically connected on another channel to the means for evacuating a content from the collection head.
